(19) Europäisches Patentamt
European Patent Office
Office européen des brevets

(11) **EP 3 371 781 B1**

## (12) EUROPEAN PATENT SPECIFICATION

(45) Date of publication and mention
of the grant of the patent:
**23.09.2020 Bulletin 2020/39**

(21) Application number: **16788782.7**

(22) Date of filing: **31.10.2016**

(51) Int Cl.:
*G06T 17/00* (2006.01)     *G06T 19/00* (2011.01)
*G06T 7/00* (2017.01)

(86) International application number:
**PCT/GB2016/053375**

(87) International publication number:
**WO 2017/077279 (11.05.2017 Gazette 2017/19)**

(54) **SYSTEMS AND METHODS FOR GENERATING AND USING THREE-DIMENSIONAL IMAGES**

SYSTEME UND VERFAHREN ZUR ERZEUGUNG UND VERWENDUNG DREIDIMENSIONALER ABBILDUNGEN

SYSTÈMES ET PROCÉDÉS DE GÉNÉRATION ET D'UTILISATION D'IMAGES TRIDIMENSIONNELLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.11.2015 GB 201519396**

(43) Date of publication of application:
**12.09.2018 Bulletin 2018/37**

(73) Proprietor: **Fuel 3D Technologies Limited Chinnor, Oxfordshire OX39 4HA (GB)**

(72) Inventors:
• **LARKINS, Andrew Henry John**
**Newbury**
**Berkshire RG14 1RU (GB)**
• **OWEN, Richard James**
**Hemel Hempstead**
**Hertfordshire HP1 1SX (GB)**
• **RALLI, Jarno Samuli**
**Princes Risborough**
**Buckinghamshire HP27 0JL (GB)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(56) References cited:
**WO-A1-2009/122200**

• **PASCAL BÉRARD ET AL: "High-quality capture of eyes", ACM TRANSACTIONS ON GRAPHICS (TOG), ACM, US, vol. 33, no. 6, 19 November 2014 (2014-11-19), pages 1-12, XP058060868, ISSN: 0730-0301, DOI: 10.1145/2661229.2661285**
• **JONGWOO LIM ET AL: "Passive Photometric Stereo from Motion", COMPUTER VISION, 2005. ICCV 2005. TENTH IEEE INTERNATIONAL CONFERENCE ON BEIJING, CHINA 17-20 OCT. 2005, PISCATAWAY, NJ, USA,IEEE, LOS ALAMITOS, CA, USA, vol. 2, 17 October 2005 (2005-10-17), pages 1635-1642, XP010857009, DOI: 10.1109/ICCV.2005.185 ISBN: 978-0-7695-2334-7**
• **THABO BEELER ET AL: "High-quality single-shot capture of facial geometry", ACM TRANSACTIONS ON GRAPHICS (TOG), ACM, US, vol. 29, no. 4, 26 July 2010 (2010-07-26), pages 1-9, XP058157927, ISSN: 0730-0301, DOI: 10.1145/1778765.1778777**

**Description**

The present invention relates to systems and methods for obtaining and generating three-dimensional (3D) images of the face of a subject, and to systems and methods for using the three-dimensional images for the selection, design and production of objects to be used in proximity with the face, such as eyewear.

Background of the invention

A conventional process for providing a subject with eyewear such as glasses (a term which is used here to include both vision correction glasses and sunglasses) involves the subject trying on series of dummy frames, and examining his or her reflection in a mirror. This is often a clumsy process, because the range of angles from which the subject can view himself/herself is limited.

In 2013, the company glasses.com proposed an iPad software application (app) which takes multiple two-dimensional pictures of a subject's face, forms a 3D model of the face using the images, and then forms a composite model which combines the 3D face model with a pre-existing model of sunglasses. However, the 3D modelling process which is possible using pictures of this kind gives limited accuracy (typically a tolerance of at least a few millimeters), so the quality of the composite model may not be high.

Modelling of 3D surfaces using two-dimensional images has been a major research topic for many years. The 3D surface is illuminated by light (visible light or other electromagnetic radiation), and the two-dimensional images collect the light reflected from it. Most real objects exhibit two forms of reflectance: specular reflection (particularly exhibited by glass or polished metal) in which, if incident light (or other electromagnetic radiation) strikes the surface of the object in a single direction, the reflected radiation propagates in a very narrow range of angles; and Lambertian reflection (exhibited by diffuse surfaces, such as matte white paint) in which the reflected radiation is isotropic with an intensity according to Lambert's cosine law (an intensity directly proportional to the cosine of the angle between the direction of the incident light and the surface normal). Most real objects have some mixture of Lambertian and specular reflective properties.

Recently, great progress has been made in imaging three-dimensional surfaces which exhibit Lambertian reflective properties by means of photometry (the science of measuring the brightness of light). For example, WO 2009/122200, "3D Imaging System" describes a system in which at least one directional light source directionally illuminates an object, and multiple light sensors at spatially separated positions record images of the object. A localization template, fast with the object, is provided in the optical fields of all the light sensors, to allow the images to be registered with each other. Photometric data is generated, and this is combined with geometric data obtained by stereoscopic reconstruction using optical triangulation. On the assumption that the object exhibits Lambertian reflection, the photometric data makes it possible to obtain an estimate the normal direction to the surface of the object with a resolution comparable to individual pixels of the image. This has permitted highly accurate imaging, although the accuracy can be reduced if any portions of the object exhibit specular refection as well as Lambertian reflection.

However, it has been found that scanning the shape of a face has relatively lower accuracy near the eyes. For one thing, since eyes are wet, they are particularly subject to specular reflections. Furthermore, forming a good 3D model of an eye is a hard task for any 3D modelling procedure which relies on optical images, because eyes are partially transparent. Most such techniques therefore give inaccurate results, particularly with regard to depth (i.e. distances in the imaging direction), so eyes tend to look cosmetically poor in the resulting 3D models. This problem is exacerbated by the presence of eyelashes, which complicate the modelling procedure significantly. A high quality system for 3D modelling of eyes using optical data can be very expensive, and if this were used in combination with a separate system for modelling the rest of the face, the combined system would be more expensive still. Furthermore, there might be significant difficulty in bringing the two three-dimensional models into register, particularly if the face moves between the two imaging steps. Pascal Bérard et Al "High-quality capture of eyes" proposes a "capture system that is capable of accurately reconstructing all the visible parts of the eye: the white sclera, the transparent cornea and the non-rigidly deforming colored iris".

Considering again the conventional process for enabling a subject to choose eyewear using dummy frames, an additional problem arises in the case that the eyewear includes refractive lenses for vision correction. The dummy frames typically do not include refractive lenses, so the subject often has difficulty seeing the frame.

Conventionally, once the subject has chosen a frame, the frame is modified (before and/or after lenses are added), to adapt it to the face of the subject to ensure that the glasses sit comfortably on the subject's ears, and are well adjusted to sit comfortably on the bridge of the subject's nose. The adjustment may be done based on measured dimensions of the subject's head and in particular eyes. The lenses too are constructed with a shape based partly on the measured dimensions. One such critical dimension is the inter-pupil distance, which is conventionally obtained using a two-dimensional image of the patient taken from the front, and using the forehead and nose as reference points. However, errors are common. Firstly, the conventional system may fail if the subject has a broken nose, or has an ethnicity associated with an unusual nose shape. For such subjects, a good fit could only be obtained by two monocular measurements are using the nose as a reference, since the subject's nose may not be symmetric about the central line of the face, and may itself not be mirror symmetric. Furthermore, since glasses sit on nose pads which rest on the side of the nose, and an unusual nose shape often cannot be seen from a frontal view, it may be impossible to produce an optical configuration for the nose pads by the conventional method.

Furthermore, conventional systems typically require that that the image includes a clear view of the subject's pupil, so will fail if the pupil is obscured by eye lashes.

Often the modification of the glasses is carried out when the subject is not present, so that the resulting glasses are unsuitable, for example because the lower edge of the fitted lenses impacts on the subject's cheek. Furthermore, the adjustment of the frame varies the distance of the lens from the eye of the subject, which may be highly disadvantageous for glasses which perform visual correction. It has been estimated that a 2mm variation of the spacing of the eye and the lens can result in a 10% difference in the resulting field of vision.

Summary of the invention

The present invention aims to provide new and useful methods and systems according to the appended independent claims for obtaining three-dimensional (3D) models of the face of a subject, and displaying images of the models.

It also aims to provide new and useful methods and systems for using the models for the selection, design and production of objects for placement in proximity to the subject's face, such as eyeware.

In general terms, the invention proposes that the face of a subject is captured by an imaging system comprising at least one directional energy source (e.g. a light source such as a visible light source) for illuminating the face (preferably successively) in at least three directions, and an imaging assembly for capturing images of the face. Each eye portion of the face is modelled by using specular reflections ("glints") in at least some of the images to fit the parameters of a three-dimensional parameterized model of the eye surface. Additionally, using at least some the images, a photometric modelling process generates a second 3D model of a skin (and typically hair) portion of the face. A 3D face model is produced by combining the eye models and the second model.

Thus, the portion(s) of the face model corresponding to a skin and hair portion of the face are obtained by a process employing photometry, and the portion(s) of the model corresponding to the eye(s) of the subject are formed using the parametrized model(s). The second model and eye model(s) may be created in a common coordinate system, using some or all of the same images, permitting accurate registration of the models.

The invention is based on the realization that the varying optical properties of different areas of the face mean that using a single optical imaging modality to model them is sub-optimal. In particular the specular reflection exhibited by eyes, which makes it difficult to use photometry to form a 3D model of them, can be used in combination with photometric modelling of the skin and/or hair, to make a composite model of the face with high accuracy.

The model of each eye may include a sclera portion representing the sclera, and a cornea portion representing the cornea. The sclera portion may be portion of the surface of a first sphere, and the cornea portion may a portion of the surface of a second sphere having a smaller radius of curvature than the first sphere. The centers of the two spheres are spaced apart, and the line joining them intersects with the center of the cornea portion of the model, at a position which is taken as the center of the pupil.

Optionally, the model of the eye(s) can be supplemented by color information about the colors of respective areas the skin and/or hair and/or respective areas of the eye(s). For example, the composite model of the face may include coloring of at least some of the cornea portion of the eye model, according to an iris color obtained from the captured images.

As mentioned above, the subject is preferably illuminated successively in individual ones of the at least three directions. If this is done, the energy sources may emit light of the same frequency spectrum (e.g. if the energy is visible light, the directional light sources may each emit white light and the captured images may be color images). However, in principle, the subject could alternatively be illuminated in at least three directions by energy sources which emit energy with different respective frequency spectra (e.g. in the case of visible light, the directional light sources may respectively emit red, white and blue light). In this case, the directional energy sources could be activated simultaneously, if the energy sensors are able to distinguish the energy spectra. For example, the energy sensors might be adapted to record received red, green and blue light separately. That is, the red, green and blue light channels of the captured images would be captured simultaneously, and would respectively constitute the images in which the object is illuminated in a single direction. However, this second possibility is not preferred, because coloration of the object may lead to incorrect photometric imaging.

Furthermore, the present method may be used in conjunction with existing iris/eye identification technology. Some such existing techniques allow the iris to be identified with high accuracy, and provide an alternative way of locating the cornea. Furthermore, observing that the iris appears in a certain image as an ellipse rather than a circle, gives an alternative way of determining the orientation of the eye. Such results can be used to check the position and/or orientation of the eye as obtained by the specular reflections, to generate a warning signal if the iris identification technology gives a result differing too much from that obtained from the specular reflections. Alternatively, by averaging the results obtained by iris identification with the position and/or orientation as obtained by the specular reflections, a more accurate result may be obtainable.

In one use of an embodiment of the invention, the capture of the images is triggered automatically. This may be done by a gaze tracking system. The images are captured upon the gaze tracking system determining that the subject is looking in a desired direction. For example, the gaze tracking system may check that the subject is looking at an object at a standard, known distance.

Advantageously, since the eye and skin/hair portions of the face model are obtained separately, the face model can be modified to model the effects of the eyes moving relative to the rest of the subject's face.

Optionally, an embodiment of the invention can be used to image the subject's face at successive times (e.g. at least one per second, and preferably more quickly) over an extended period (e.g. at least 5 second, 10 seconds or at least a minute), to track the movement of the eye(s) during the extended period. This procedure might be carried out in real time.

Known gaze tracking algorithms can be used to improve the accuracy, for example interpolating in the gaps between the imaging times, or using multiple ones of the images to reduce noise in the imaging process.

Various forms of directional energy source may be used in embodiments of the invention. For example, a standard photographic flash, a high brightness LED cluster, or Xenon flash bulb or a 'ring flash'. It will be appreciated that the energy need not be in the visible light spectrum.

In principle, there could be only one directional energy source which moves so as to successively illuminate the subject from successive directions.

However, more typically, at least three energy sources are provided. It would be possible for these sources to be provided as at least three energy outlets from an illumination system in which there are fewer than three elements which generate the energy. For example, there could be a single energy generation unit (light generating unit) and a switching unit which successively transmits energy generated by the single energy generation unit to respective input ends of at least three energy transmission channels (e.g. optical fibers). The energy would be output at the other ends of the energy transmission channels, which would be at three respective spatially separately locations. Thus the output ends of the energy transmission channels would constitute respective energy sources. The light would propagate from the energy sources in different respective directions.

Where visible-light directional energy is applied, then the energy sensors may be two or more standard digital cameras, or video cameras, or CMOS sensors and lenses appropriately mounted. In the case of other types of directional energy, sensors appropriate for the directional energy used are adopted. A discrete sensor may be placed at each viewpoint, or in another alternative a single sensor may be located behind a split lens or in combination with a mirror arrangement.

The energy sources and viewpoints preferably have a known positional relationship, which is typically fixed. The energy sensor(s) and energy sources may be incorporated in a portable, hand-held instrument. Alternatively, particularly in the application described below involving eyewear, the energy sensor(s) and energy sources may be incorporated in an apparatus which is mounted in a building, e.g. at the premises of an optician or retailer of eyewear. In a further application, as discussed below, the apparatus may be adapted to be worn by a user, e.g. as part of a helmet.

Although at least three directions of illumination are required for photometric imaging, the number of illumination directions may be higher than this. The energy sources may be operated to produce a substantially constant total intensity over a certain time period (e.g. by firing them in close succession), which has the advantage that the subject is less likely to blink.

Alternatively, the energy sources may be controlled to be turned on by processor (a term which is used here in a very general sense to include for example, a field-programmable gate array (FGPA) or other circuitry) which also controls the timing of the image capture devices. For example, the processor could control the a different subset of the energy sources to produce light in respective successive time periods, and for each of the image capture device to capture a respective image during these periods. This has the advantage that the processor would be able to determine easily which of the energy sources was the cause of each specular reflection.

Specular reflections may preserve polarization in the incident light, while Lambertian reflections remove it. To make use of this fact, some or all of the light sources may be provided with a filter to generate light with a predefined linear polarization direction, and some or all of the image capture devices may be provided with a filter to remove incident light which is polarized in the same direction (thus emphasizing Lambertian reflections) or the transverse direction (thus emphasizing specular reflections).

One particularly suitable possibility, if the energy sources include one or more energy sources of relatively high intensity and one or energy sources which are of relatively lower intensity, is to provide polarization for the one of more of the energy sources of high intensity, and no polarization for the one or more energy sources which are of relatively lower intensity. For example, the specular reflections may only be captured using only the high intensity energy sources, in which case (e.g. only) those energy sources would be provided with a polarizer producing a polarization which is parallel to a polarization of the energy sensors used to observe the specular reflections.

One or more of the energy sources may be configured to generate light in the infrared (IR) spectrum (wavelengths from 700nm to 1mm) or part of the near infrared spectrum (wavelengths from 700nm to 1100nm). These wavelength ranges have several advantages. Firstly, with reference to the possibility mentioned above of using the present invention in combination with iris recognition technology, IR light permits a sharp contrast between the eye's iris and pupil regions. Secondly, since the subject is substantially not sensitive to IR or near-IR radiation, it can be used in situations in which it is not desirable for the subject to react to the imaging process. For example, IR or near-IR radiation would not cause the subject to blink. Also, IR and near-IR radiation may be used in applications as discussed below in which the user is presented with other images during the imaging process.

The face model may be sufficiently accurate to be employed in an automatic process for designing an object for use in proximity with the face (the term "proximity" is used here to include also the possibility that the object is in contact with the face).

The object may for example be an item of eyewear for the subject. The eyewear typically includes at least one lens for each eye, and a frame for supporting the lens(es) in relation to the subject's face. For example, the item of eyewear may be a set of glasses, of a type having any one of more of the following functions: vision correction, eye protection (including goggles or sunglasses) and/or for cosmetic reasons.

In contrast to the conventional method of allowing the subject to choose an item of eyewear using dummy frames, a facial model produced by the present invention may be used in a process for visualizing the appearance of an item of eyewear when worn on the subject's face. That is, the face model may be combined with a model of the frame, to produce a composite model, and the composite model may be displayed, such as using a screen. Thus, the subject may be able to view an image of himself/herself wearing the eyewear. The subject may be able to view the image from perspectives which are not possible using a mirror, and may be able to do this at a time when the subject is wearing a previously created pair of vision correcting glasses.

Optionally, the displayed images may be modified to reflect possible variation of the orientation of the eye(s) in relation to the skin/hair portion of the model. In this way it is possible for the subject to see further images of himself/herself wearing the eyewear which would simply not be possible using the conventional system using a mirror.

In contrast to the conventional method of personalizing eyewear, the present invention in preferred embodiments makes possible a sufficiently accurate model of the face, including the eyes, that it can be used as part of a process for designing an item of eyewear. Thus, one or more distance measurements may be obtained automatically from the face model (such as the interpupillary distance), and these measurements may be used to modify dimensions of a pre-existing model of at least one component of the item of eyewear. For example, if the eyewear is a pair of glasses having arms for connection to the subject's ears, and/or pads for resting on the subject's nose, the distance measurements obtained from the face model may be used to modify the length of the arms and/or the configuration of the pads. Thus, the modified model of the item of eyewear may have tailored eye position, nose position and ear position, which allows the eyewear to be designed to fit well, and provide both comfort and performance.

Optionally, there may be a step of checking, using the face model, that modified eyewear will have at least a desired clearance with (i.e. spacing from) the cheek and eyebrows.

The modified model of the item of eyewear may be used during the visualization process described above.

Alternatively or additionally, at least one component of the item of eyewear (e.g. the arms of the glasses, or the nose pads) may be fabricated (e.g. by molding or 3D printing) according to the modified eyewear model. This would provide the item of eyewear in a comfortable form, and with high performance.

Although the object has been described above in relation to examples of eyewear which are glasses (including glasses for visual correction, sunglasses and safety glasses (e.g. goggles)), it is to be understood that the object which is designed may take other forms. For example, it may be part of an augmented reality system which, under the control of an electronic processor, presents images to at least one of the eyes of the subject in dependence on the position of the eye(s). Alternatively, it may be a head-up display for providing images to at least one of the eye(s) (i.e. a monocular or binocular vision system). Furthermore, the object may not be one which is directly connected to the subject's head. For example, it may be an object for mounting to a helmet to be worn by the subject.

Furthermore, apart from designing objects to the placed proximate the face, a face model produced by an embodiment of the present invention may be used in other ways, such as for tracking the eye movements in relation to the face and/or for use in an optical system which interacts with the eye.

Brief description of the drawings

An embodiment of the invention will now be described for the sake of example only with reference to the following figures in which:

Fig. 1 shows a first schematic view of an imaging assembly for use in an embodiment of the present invention;

Fig. 2 shows a face and localization template as imaged by the image assembly of Fig. 1;

Fig. 3 shows an eye model for use in the embodiment;

Fig. 4 illustrates schematically how specular reflections from the eye are used by the embodiment to find the parameters of the eye model of Fig. 3;

Fig. 5 illustrates schematically how specular reflections from the eye are used by a variation of the embodiment to find the parameters of the eye model of Fig.3;

Fig. 6 is a flow diagram of a method performed by an embodiment of the invention; and

Fig. 7 illustrates an embodiment of the invention incorporating the imaging assembly of Fig. 1 and a processor.

Detailed description of the embodiments

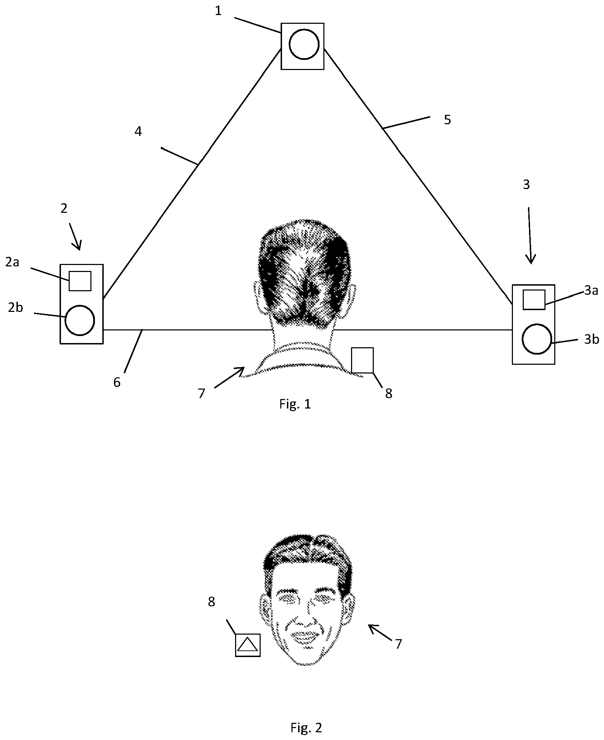

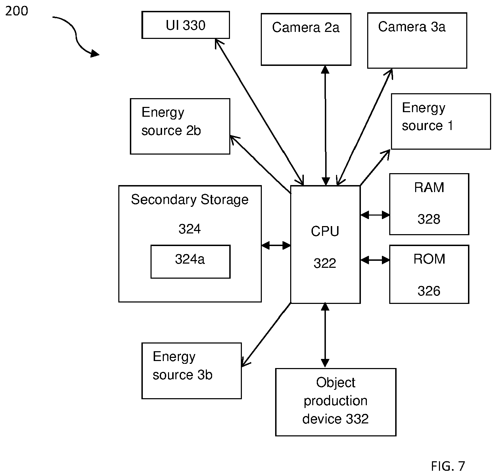

Referring firstly to Fig. 1, an imaging assembly is shown which is a portion of an embodiment of the invention. The embodiment includes an energy source 1. It further includes units 2, 3 which each include a respective energy sensor 2a, 3a in form of an image capturing device, and a respective energy source 2b, 3b. The units 2, 3 are fixedly mounted to each other by a strut 6, and both are fixedly mounted to the energy source 1 by struts 4, 5. The exact form of the mechanical connection between the units 2, 3 and the energy source 1 is different in other forms of the invention, but it is preferable if it maintains the energy source 1 and the units 2,3 not only at fixed distances from each other but at fixed relative orientations. The positional relationship between the energy sources 1, 2b, 3b and the energy sensors 2a, 3a is pre-known. The energy sources 1, 2b, 3b and image capturing devices 2a, 3a are therefore incorporated in a portable, hand-held instrument. In addition to the assembly shown in Fig. 1, the embodiment includes a processor which is in electronic communication with the energy sources 1, 2b, 3b and image capturing devices 2a, 3a. This is described below in detail with reference to Fig. 7.

The energy sources 1, 2b, 3b are each adapted to generate electromagnetic radiation, such as visible light or infra-red radiation. The energy sources 1, 2b, 3b are all controlled by the processor. The output of the image capturing devices 2a, 3a is transmitted to the processor.

Each of the image capturing devices 2a, 3a is arranged to capture an image of the face of a subject 7 positioned in both the respective fields of view of the image capturing devices 2a, 3a. The image capturing devices 2a, 3a are spatially separated, and preferably also arranged with converging fields of view, so the apparatus is capable of providing two separated viewpoints of the subject 7, so that stereoscopic imaging of the subject 7 is possible. The case of two viewpoints is often referred to as a "stereo pair" of images, although it will be appreciated that in variations of the embodiment more than two spatially-separated image capturing devices may be provided, so that the subject 7 is imaged from more than two viewpoints. This may increase the precision and/or visible range of the apparatus. The words "stereo" and "stereoscopic" as used herein are intend to encompass, in addition to the possibility of the subject being imaged from two viewpoints, the possibility of the subject being imaged from more than two viewpoints.

Note that the images captured are typically color images, having a separate intensity for each pixel each of three color channels. In this case, the three channels may be treated separately in the process described below (e.g. such that the stereo pair of images also has two channels).

Fig. 2 shows the face of the subject looking in the direction opposite to that of Fig. 1. As shown in both Figs. 1 and 2, the subject may be provided with a localization template 8 in the visual field of both the image capturing devices 2a, 3a, and in a substantially fixed positional relationship with the subject (for example, it may be attached to him). The localization template 8 is useful, though not essential, for registering the images in relation to each other. Since it is in the visual field of both the image capturing devices 2a, 3a, it appears in all the images captured by those devices, and it is provided with a known pattern, so that the processor is able to identify it from the image, and from its position, size and orientation in any given one of the images, reference that image to a coordinate system defined in relation to the localization template 8. In this way, all images captured by the image capturing devices 2a, 3a can be referenced to that coordinate system. If the subject 7 moves slightly between the respective times at which any two successive images are captured, the localization template 8 will move correspondingly, so the subject 7 will not have moved in the coordinate system. In variations of the embodiment in which the positional relationship of the energy sources 1, 2b, 3b and image capturing devices 2a, 3a is not known, it may be determined if the energy sources 1, 2b, 3b illuminate the localization template 8.

In other embodiments of the invention, the images captured by image capturing devices 2a, 3a may be mutually registered in other ways, such as identifying in each image landmarks of the subject's face, and using these landmarks to register the images with each other.

Suitable image capture devices for use in the invention include the 1/3-Inch CMOS Digital Image Sensor (AR0330) provided by ON Semiconductor of Arizona, US. All the images used for the modelling are preferably captured during a period of no more than 0.2s, and more preferably no more than 0.1s. However, it is possible to envisage embodiments in which the images are captured over a longer period, such as up to about 5 seconds.

The skin and hair of the subject 7 will typically reflect electromagnetic radiation generated by the energy sources 1, 2b, 3b by a Lambertian reflection, so the skin and hair portion of the subject's face may be imaged in the manner described in detail in WO 2009/122200.

In brief, two acquisition techniques for acquiring 3D information are used to construct the second model. The first is photometric reconstruction, in which surface orientation is calculated from the observed variation in reflected energy against the known angle of incidence of the directional source. This provides a relatively high-resolution surface normal map alongside a map of relative surface reflectance (or illumination-free colour), which may be integrated to provide depth, or range, information which specifies the 3D shape of the object surface. Inherent to this method of acquisition is output of good high-frequency detail, but there is also the introduction of low-frequency drift, or curvature, rather than absolute metric geometry because of the nature of the noise present in the imaging process. The second technique of acquisition is passive stereoscopic reconstruction, which calculates surface depth based on optical triangulation. This is based around known principles of optical parallax. This technique generally provides good unbiased low-frequency information (the coarse underlying shape of the surface of the object), but is noisy or lacks high frequency detail. Thus the two methods can be seen to be complementary. The second model may be formed by forming an initial model of the shape of the skin and hair using stereoscopic reconstruction, and then refining the model using the photometric data.

The photometric reconstruction requires an approximating model of the surface material reflectivity properties. In the general case this may be modelled (at a single point on the surface) by the Bidirectional Reflectance Distribution Function (BRDF). A simplified model is typically used in order to render the problem tractable. One example is the Lambertian Cosine Law model. In this simple model the intensity of the surface as observed by the camera depends only on the quantity of incoming irradiant energy from the energy source and foreshortening effects due to surface geometry on the object. This may be expressed as:

$$I = P\rho \boldsymbol{L} \cdot \boldsymbol{N} \qquad \text{(Eqn 1)}$$

where $I$ represents the intensity observed by the image capture devices 2a, 3a at a single point on the object, $P$ the incoming irradiant light energy at that point, $\boldsymbol{N}$ the object-relative surface normal vector, $\boldsymbol{L}$ the normalized object-relative direction of the incoming lighting and $\rho$ the Lambertian reflectivity of the object at that point. Typically, variation in $P$ and $\boldsymbol{L}$ is pre-known from a prior calibration step (e.g. using the localization template 8), or from knowledge of the position of the energy sources 1, 2b, 3b, and this (plus the knowledge that $\boldsymbol{N}$ is normalized) makes it possible to recover both $\boldsymbol{N}$ and $\rho$ at each pixel. Since there are three degrees of freedom (two for $\boldsymbol{N}$ and one for $\rho$), intensity values $I$ are needed for at least three directions $\boldsymbol{L}$ in order to uniquely determine both $\boldsymbol{N}$ and $\rho$.

This is why three energy sources 1, 2b, 3b are provided.

The stereoscopic reconstruction uses optical triangulation, by geometrically correlating the positions in the images captured by the image capture devices 2a, 3a of the respective pixels representing the same point on the face (e.g. a feature such as a nostril or facial mole which can be readily identified on both images). The pair of images is referred to as a "stereo pair". This is done for multiple points on the face to produce the initial model of the surface of the face.

The data obtained by the photometric and stereoscopic reconstructions is fused by treating the stereoscopic reconstruction as a low-resolution skeleton providing a gross-scale shape of the face, and using the photometric data to provide high-frequency geometric detail and material reflectance characteristics.

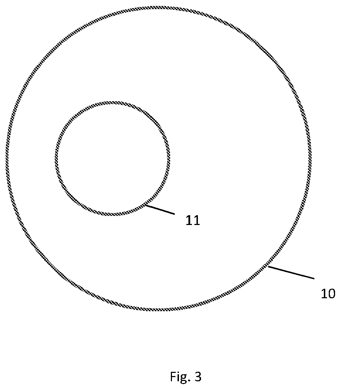

Turning to the way in which the embodiment forms the 3D model of the subject's eye(s), the processor uses an eye model of each eye defined by a plurality of numerical parameters. Several levels of refinement of the eye model are possible, but a simple model which can be used is shown in Fig. 3.

It consists of a sclera portion 10 representing the sclera (the outer white part of the eye), and a cornea portion 11 intersecting with the sclera portion. The sclera portion may be frusto-spherical (i.e. a sphere minus a segment of the sphere which is to one side of a plane which intersects with the sphere). However, since only the front of the eyeball can cause reflections, the sclera portion of the eye model may omit portions of the spherical surface which are angularly spaced from the cornea portion about the centre of the sphere by more than a predetermined angle. The cornea portion 11 of the model is a segment of a sphere with a smaller radius of curvature than then sclera portion 10; the cornea portion 11 too is frusto-spherical, being less than half of the sphere having smaller radius of curvature. The cornea portion 11 is provided upstanding from the outer surface of the sclera portion 10 of the model, and the line of intersection between the sclera portion 10 and the cornea portion 11 is a circle. The center of the cornea portion 11 is taken as the center of the pupil. It lies on the line which passes through the center of the sphere used to define the sclera portion 10, and the center of the sphere used to define the cornea portion 11. Note that in a variation of the model, the sclera portion 10 of the model omits portions corresponding to the rear of the sclera (i.e. those portions which are never visible). More generally, the sclera portion 10 may only include points on the sphere with the higher radius of curvature which are within a predetermined distance of the cornea portion 11.

In fact, the eyeballs of individuals (especially adult individuals) tend to be of about the same size, and this knowledge may be used to pre-set certain dimensions of the eye model. Furthermore, it may be possible to arrange that the subject is looking in a certain direction when the specular reflections are captured, which means that the orientation of the eye is pre-known. Taking these two factors into account, the eye model may, for example, be adequately defined using only four parameters: three parameters indicating the position of the cornea portion 11 in three dimensional space, and one parameter defining the radius of curvature of the cornea portion 11. However, in other embodiments, other parameters may be used instead, or in addition, such as parameters indicating: the translational position of the center of the sclera portion 10 (3 parameters); the orientation (rotational position) relative to the center of the sclera portion 10 of the line which passes through the two spheres; the radius of curvature of the sclera portion 10; and/or the distance by which the cornea portion stands up from the sclera portion.

Suppose that each of the energy sources 1, 2b, 3b is fired in turn, and that when each of the energy sources 1, 2b, 3b is fired each of the image capturing devices 2a, 3a captures an image. The electromagnetic radiation produced by each energy source is reflected by each of the eyes of the subject in a specular reflection. Thus, each image captured by one of the devices 2a, 3a will include at least one very bright region for each eye, and the position in that image of the very bright region is a function of the translational position and orientation of the eye. In total six images of the face are captured, and if each of them contains (in the eye) a very bright region ("glint") with a two dimensional position in the image, then in total 12 data values can be obtained.

Using the six data values from the images captured by one image capture device, it is possible for 6 parameters of the eye model to be estimated ("fitted" to the data values). Using all 12 data values (i.e. additionally the 6 data values from the images captured by the second image capture device), it is possible to estimate these values more exactly, and also to estimate the values of optional additional parameters. This can include computationally searching for values of the desired parameters of the eye model which are most closely consistent with the observed positions of the specular reflections within the images.

Optionally, the processor may express the translational position and orientation of the center of the sclera portion 10 in a coordinate system defined relative to the fixed relative positions of the units 2, 3 and the energy source 1, and this may then be mapped to the reference frame used to define the skin/hair portion of the face model (e.g. the reference frame defined using the localization template 8, if one is used).

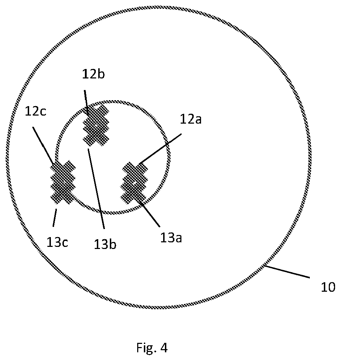

This is illustrated schematically in Fig. 4, which shows by crosses 12a, 12b, 12c specular reflections captured by the image capturing device 2a, and by crosses 13a, 13b, 13c the specular reflections captured by the image capturing device 2b. The crosses are shown in relation with the eye model following the process of fitting the parameters of the eye model to the observed positions of the specular reflections in the image.

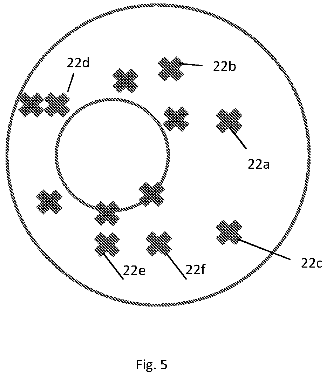

As mentioned above, the number of energy sources may be increased. Suppose for example that there are six energy sources. In this case, each of the imaging devices 2a, 3a could capture up to six images, each showing the specular reflection when a corresponding one of the energy sources is generating electromagnetic radiation. Again the specular reflection would cause a bright spot in the corresponding two-dimensional image, so in total, having identified in each the two-dimensional image the two-dimensional position of the bright spot, the processor would then twenty-four data values. These twenty-four values could then be used to estimate the six numerical parameters defining the eye model. This is illustrated in Fig. 5, where the six specular reflections captured by the imaging device 2a are labelled 22a, 22b, 22c, 22d, 22e and 22f. The six specular reflections captured by the imaging device 3a are shown in Fig. 5 but not labelled.

One method of improving the accuracy of the above method for detecting eye position would be to use a known eye tracking algorithm, which interpolates between positions obtained at different respective times.

Optionally, an iris recognition method (e.g. of a conventional form) could be employed to give an alternative method of detecting the position of the eye. This could be used to detect a problem in the detection using specular reflections, by noting a contradiction between the two methods of eye position detection (e.g. if the specular reflection method indicates that the eye is pointing forward, but the iris is detected to be elliptical; or if the front of the cornea is detected using specular reflections to be at a position which the iris detection method says is near the iris). Or, the results of the two methods of eye position detection may be combined to give a single result which is less liable to noise.

The energy sources 1, 2b, 3b may be designed in several ways.

First, as mentioned above, it may be advantageous for the processor to control the timing of the operation of the energy sources, for example to ensure that only a selected subset of the energy sources 1, 2b, 3b are operating when a certain image is captured, e.g. such that only one of the energy sources is operating when any corresponding image is captured; this is usual for photometry. If the energy sources (at least, those which produce the same level of light intensity) are activated successively with no significant gaps between then during this period the total level of light would be substantially constant; this would minimize the risk of the subject blinking. Optionally, an additional image may be captured with all the light sources firing.

Secondly, the illumination system may employ polarization of the electromagnetic radiation. As described above, the processor forms the second model using Lambertian reflections, and fits the parameters of each eye model using the specular reflections. In fact, however, the skin and hair are not perfect Lambertian reflectors, and an eye is not a perfect specular reflector. To address this, the imaging process may use polarization to help the processor distinguish Lambertian reflection from specular reflection, since Lambertian reflection tends to destroy any polarization in the incident light, whereas specular reflection preserves polarization.

In one possibility, the energy sources 1, 2b, 3b would comprise polarization filters (e.g. linear polarization filters), and the image capturing devices 2a, 3a would be provided with a respective constant input polarization filter, to preferentially remove electromagnetic radiation polarized in a certain direction. The choice of that direction, relative to the polarization direction of the electromagnetic radiation emitted by the energy sources 1, 2b, 3b, would determine whether the filter causes the image capturing devices 2a, 3a to preferentially capture electromagnetic radiation due to Lambertian reflection, or conversely preferentially capture electromagnetic radiation due to specular reflection. A suitable linear polarizer would be the XP42 polarizer sheet provided by ITOS Gesellschaft für Technische Optik mbH of Mainz, Germany. Note that this polarizer sheet does not work for IR light (for example, with wavelength 850nm), so should not be used if that choice is made for the energy sources.

A further possibility would be for the imaging apparatus to include a first set of image capturing devices for capturing the Lambertian reflections, and a second set of image capturing devices for capturing the specular reflections. The first image capturing devices would be provided with a filter for preferentially removing light polarized in the direction parallel to the polarization direction of the electromagnetic radiation before the reflection and/or the second image capturing devices would be provided with a filter for preferentially removing light polarized in the direction transverse to the polarization direction of the electromagnetic radiation before the reflection. The processor would use the images generated by the first set of image capturing devices to form the second model, and the images generated by the second set of image capturing devices for fit the parameters of the eye model.

Alternatively, each of the image capturing devices 2b, 2c may be provided with a respective electronically-controllable filter, which filters light propagating towards the image capturing device to preferentially remove electromagnetic radiation polarized in a certain direction. The image capturing device may capture two images at times when a given one of the energy sources 1a, 2a, 3a is illuminated: one image at a time when the filter is active to remove the electromagnetic radiation with the certain polarization, and one when the filter is not active. The relative proportions of Lambertian reflection and specular reflection in the two images will differ, so that by comparing the two images, the processor is able to distinguish the Lambertian reflection from the specular reflection, so that only light intensity due to the appropriate form of reflection is used in form the second model and/or the eye model.

Thirdly, some of all of the energy sources 1, 2b, 3b may generate IR or near-IR light. This is particularly desirable if it is not desirable for the subject to see the directional energy (e.g. because it is not desirable to make him or her blink; or because the embodiment is used at a time when the subject is looking at other things). Also, IR or near-IR light is more easily able to detect the position of the IRIS because of a sharp contrast between the eye's iris and pupil regions, so it is desirable in embodiments in which iris detection is utilized.

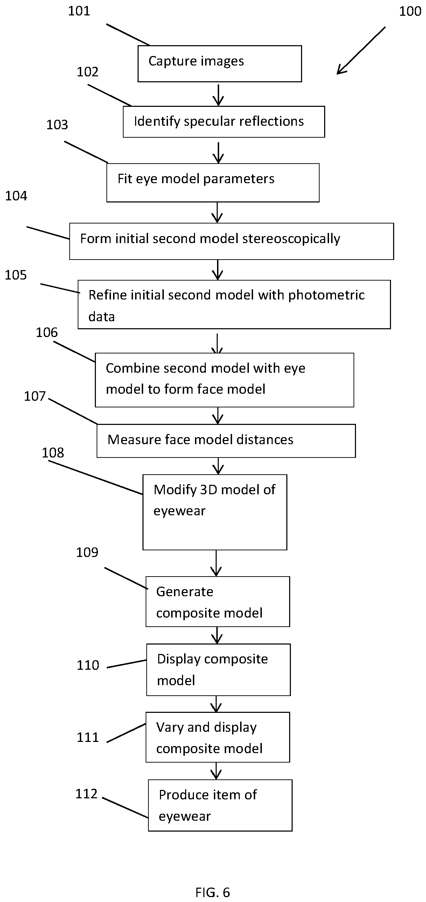

The process 100 performed by the embodiment is illustrated in Fig. 6.

In the first step 101, the energy sources 1, 2b, 3b are illuminated (e.g. one by one successively, or together), and one or more images are captured by each of the image capturing devices 2a, 3a. In one possibility, the subject is asked to look at a test chart straight ahead, and when it is determined (e.g. automatically by a gaze tracking device) that he or she is doing this, the image capturing devices 2a, 3a each take at least one image. The energy sources 1, 2b, 3b may be operated continuously during this time, in which case the image capture devices 2a, 3a may each take one image. Alternatively, the energy sources 1, 2b, 3b may be triggered at different times (e.g. sequentially), and the image capture devices 2a, 3a triggered to capture multiple images at respective times when different respective combination of the energy sources 1, 2b, 3b are in operation.

In step 102, the specular reflections in the images are identified, and in step 103 the specular reflections are used to estimate the parameters of the eye models for each eye.

In step 104, an initial version of a second three-dimensional model of the face (including the eye regions) is formed stereoscopically. Note that in an alternative form of the embodiment, the initial second 3D model may be formed in other ways, for example using a depth camera. Known types of depth camera include those using sheet-of-light triangulation, structured light (that is, light having a specially designed light pattern), time-of-flight or interferometry.

In step 105, the initial second model is refined using the images and photometric techniques.

Note that optionally the eye models obtained in steps 102 and 104 may be used in steps 104 and 105. After all, the skin near the eyes is overlying the eyeballs, so the position of the eyes may be used as a constraint on the second model.

In step 106, the second model and the eye models are combined to form a complete face model. This includes removing the portions of the second model which correspond to the eyes, since this portion of the second model is both inaccurate (due to specular reflections) and redundant (due to the existence of the eye models). The removal of these portions of the second model may be done by (i) removing any portion of the second model which is within either of the fitted eye models (this has been found to be an effective technique because the second model typically errs in the portions corresponding to the eyes by having a greater distance from the image capturing devices 2a, 3a than the fitted eye models), and optionally (ii) removing any "islands" in the second model (i.e. portions of the second model which were isolated by the removal step (i)). The face model may be accurate to within 100 microns, or have an even higher accuracy.

Once the face model has been defined, the processor may use this in various ways. As shown in Fig, 6, in step 107 the processor measures certain dimensions of the face model, such as the inter-pupil distance, and the distances between locations on the nose where the eyewear will be supported and the ears.

The processor stores in a data-storage device a 3D model of at least part of an object intended to be placed in proximity of the face. For example, the object may be an item of eyewear such as a pair of glasses (which may be glasses for vision correction, sunglasses or glasses for eye protection). In step 108, the processor uses the measured dimensions of the face model to modify at least one dimension of the 3D model of the eyewear. For example, the configuration of a nose-rest component of the object model (which determines the position of a lens relative to the nose) may be modified according to the inter-pupil distance, and/or to ensure that the lenses are positioned at a desired spatial location relative to the subject's eyes when the eyes face in a certain direction. Furthermore, if the item of eyewear has arms to contact the user's ears, the length of the arms may be modified in the eyewear model to make this a comfortable fit. If the face model is accurate to within 100 microns, this will meet or exceed the requirements for well-fitting glasses. Furthermore, at least one dimension of at least one lens of the eyewear may be modified based on the measured distances.

In step 109, the processor uses the face model and the modified object model to generate a composite model of the face and the object. Optionally, it can be checked at this time that there is no unintended intersection of the item of eyewear with the user's cheeks.

In step 110 this composite model is displayed to the subject, e.g. using a screen. The user may be given the option to modify the direction from which the composite model is displayed.

In step 111, the subject is given the option of varying the composite model, for example by modifying the direction in which the eyes face.

In step 112, the system uses the modified eyewear model to produce at least part of the object according to the model. For example, if the object is an item of eyewear, it might produce at least a component of the eyewear (e.g. the arms and/or the nose-rest component). This can be done for example by three-dimensional printing. Note that if the eyewear is an item such as varifocal glasses, great precision in producing them is essential, and a precision level of the order of the 100 microns, which is possible in preferred embodiments of the invention, may be essential for high technical performance.

Fig. 7 is a block diagram showing a technical architecture of the overall system 200 for performing the method.

The technical architecture includes a processor 322 (which may be referred to as a central processor unit or CPU) that is in communication with the cameras 2a, 3a, for controlling when they capture images and receiving the images. The processor 322 is further in communication with, and able to control the energy sources 1, 2b, 3b.

The processor 322 is also in communication with memory devices including secondary storage 324 (such as disk drives or memory cards), read only memory (ROM) 326, random access memory (RAM) 328. The processor 322 may be implemented as one or more CPU chips.

The system 200 includes a user interface (UI) 330 for controlling the processor 322. The UI 330 may comprise a touch screen, keyboard, keypad or other known input device. If the UI 330 comprises a touch screen, the processor 322 is operative to generate an image on the touch screen. Alternatively, the system may include a separate screen (not shown) for displaying images under the control of the processor 322.

The system 200 optionally further includes a unit 332 for forming 3D objects designed by the processor 322; for example the unit 332 may take the form of a 3D printer. Alternatively, the system 200 may include a network interface for transmitting instructions for production of the objects to an external production device.

The secondary storage 324 is typically comprised of a memory card or other storage device and is used for non-volatile storage of data and as an over-flow data storage device if RAM 328 is not large enough to hold all working data. Secondary storage 324 may be used to store programs which are loaded into RAM 328 when such programs are selected for execution.

In this embodiment, the secondary storage 324 has an order generation component 324a, comprising non-transitory instructions operative by the processor 322 to perform various operations of the method of the present disclosure. The ROM 326 is used to store instructions and perhaps data which are read during program execution. The secondary storage 324, the RAM 328, and/or the ROM 326 may be referred to in some contexts as computer readable storage media and/or non-transitory computer readable media.

The processor 322 executes instructions, codes, computer programs, scripts which it accesses from hard disk, floppy disk, optical disk (these various disk based systems may all be considered secondary storage 324), flash drive, ROM 326, RAM 328, or the network connectivity devices 332. While only one processor 322 is shown, multiple processors may be present. Thus, while instructions may be discussed as executed by a processor, the instructions may be executed simultaneously, serially, or otherwise executed by one or multiple processors.

Whilst the foregoing description has described exemplary embodiments, it will be understood by those skilled in the art that many variations of the embodiment can be made within the scope of the attached claims.

Further features of the invention are defined by the following numbered clauses:

Clause 1. An apparatus for computing a three-dimensional (3D) face model of a face of a subject, comprising:

at least one directional energy source arranged to directionally illuminate the face of the subject in at least three directions;

an imaging sensing assembly having at least one energy sensor arranged to capture at least one image of the face when the face is illuminated in the at least three directions;

a processor arranged to analyze the images, by:

(i) detecting specular reflections within at least one of the images;
(ii) for at least one eye of the face, fitting a plurality of parameters of a three-dimensional model of the eye to the detected specular reflections;
(iii) generating photometric data for a plurality of respective positions on the face;
(iv) using the photometric data to generate a second three-dimensional model of a portion of the face; and
(v) forming the face model by combining the model of the at least one eye with the second model.

Clause 2. An apparatus according to clause 1 in which the processor is arranged to generate the second model by:

generating geometric data comprising an initial three dimensional model by stereoscopic reconstruction using optical triangulation; and combining the geometric data and the photometric data.

Clause 3. An apparatus according to clause 1 or clause 2 in which the at least one eye model comprises a sclera portion representing a sclera of the eye, and a cornea portion representing a cornea of the eye, the parameters of the model including one or more parameters representing the orientation of the cornea portion in relation to the sclera portion.

Clause 4. An apparatus according to clause 3 in which the sclera portion of the eye model is a portion of the surface of a first sphere, and the cornea portion is a portion of the surface of a second sphere having a smaller radius of curvature than the first sphere, the centers of the two spheres being spaced apart.

Clause 5. An apparatus according to clause 3 or clause 4 in which the eye model comprises color data associated with the cornea portion of the eye model, the processor being arranged to generate the color data from the captured images.

Clause 6. An apparatus according to any preceding clause in which there are a plurality of said energy sources, and the processor is arranged:

to control the directional energy sources, the processor controlling different subsets of the energy sources to produce energy in each of respective successive time periods, and

to control the directional energy sensors to capture at least one of the images in each of the time periods,

whereby the specular reflections in each of the images are due to the subset of the directional energy sources which produced energy in the corresponding time period.

Clause 7. An apparatus according to any preceding clause in which the processor is arranged to obtain one or more distance measurements from the face model.

Clause 8. An apparatus according to clause 7 in which the face model includes eye models for each of the subject's eyes, and the distance measurements include a measure of the spacing of two pupils of the respective eye models.

Clause 9. An apparatus according to clause 7 or 8 in which the distance measurements include a measurement of a distance from a nose portion of the face model to a point on one of the eye models.

Clause 10. An apparatus according to any of clauses 7 to 9 in which the distance measurement includes a measurement of a distance from a nose portion of the face model to an ear portion of the face model.

Clause 11. An apparatus according to any of clauses 7 to 10 in which the processor is operative to modify, based on the distance measurement, at least one dimension of a 3D model of an element, and to transmit instructions to cause the element to be fabricated, whereby the element is fabricated with at least one dimension dependent on the distance measurement.

Clause 12. An apparatus according to clause 11 further comprising a 3D printer for receiving the instructions from the processor and fabricating the element.

Clause 13. An apparatus according to clause 11 or 12 in which the element is at least a component of an object to be placed in proximity to the face of the subject.

Clause 14. An apparatus according to any preceding claim further comprising a screen, the processor being operative to display an image of the face model using the screen.

Clause 15. An apparatus according to clause 14 in which the processor is operative to modify the face model by modifying the eye models to simulate a rotation of the eyes, and to display an image of the modified eye model.

Clause 16. An apparatus according to clause 14 or clause 15 in which the processor is operative to display on the screen a composite image of the face model and a model of an object stored in a data storage device of the apparatus, the composite image showing the object in proximity to the face model.

Clause 17. An apparatus according to clause 16 when dependent on any of clauses 7 to 10 in which the processor is arranged to use the distance measurements to modify the model of the object, and display on the screen a composite image of the face model and the modified model of the object.

Clause 18. An apparatus according to clauses 13 or either of clauses 16 or 17 in which the object is an item of eyewear.

Clause 19. An apparatus according to clause 18 in which the object is a pair of glasses.

Clause 20. An apparatus according to clause 13 or any of clauses 16 to 19 in which the object comprises an electronic image generation device for generating and presenting an image to the eyes of the subject.

Clause 21. An apparatus according to clause 13 or any of clauses 16 to 19 further comprising determining whether the model of the object is spaced from at least one portion of the face model by at least a predetermined distance.

**Claims**

1. A computer-implemented method for computing a three-dimensional (3D) face model of a face of a subject, the method comprising:

   (a) illuminating the face of the subject in at least three directions;
   (b) capturing one or more images of the face when the face is illuminated in the at least three directions;
   (c) detecting specular reflections within at least one of the images;
   (d) for at least one eye of the face, fitting a plurality of parameters of a three-dimensional model of the eye to the detected specular reflections;
   (e) using at least one of the images to generate photometric data for a plurality of respective positions on the face;
   (f) using the photometric data to generate a second three-dimensional model of a portion of the face; and
   (g) forming the face model by combining the model of the at least one eye and the second model, wherein

   the at least one eye model comprises a sclera portion representing a sclera of the eye, and a cornea portion representing a cornea of the eye; and
   the sclera portion of the eye model is a portion of the surface of a first sphere, and the cornea portion is a portion of the surface of a second sphere having a smaller radius of curvature than the first sphere, the centers of the two spheres being spaced apart, and the parameters of the model comprising the rotational position relative to a center of the sclera portion of a line which passes through the centers of the two spheres.

2. A method according to claim 1 in which in step (b) each of the images is captured from a corresponding one of a plurality of viewpoints, and the step (f) of generating the second model is performed by:

   generating geometric data comprising an initial three dimensional model by stereoscopic reconstruction using optical triangulation; and
   combining the geometric data and the photometric data.

3. A method according to claim 1 or claim 2 further including using at least one of the images to derive color data in relation to the cornea, and associating the color data with the cornea portion of the at least one eye model.

4. A method according to any of claims 1 to 4, in which:

   the illumination of the face is by controlling a plurality of directional energy sources, wherein in each of successive time periods a respective subset of the directional energy sources are activated, and
   the method further comprises capturing at least one of the images in each of the time periods,

whereby the specular reflections in each of the images are due to the subset of the directional energy sources which produced energy in the corresponding time period.

5. A method according to any of claims 1 to 4 further comprising obtaining one or more distance measurements from the face model.

6. A method according to claim 5 in which the face model includes eye models for each of the subject's eyes, and the distance measurements include a measure of the spacing of two pupils of the respective eye models, and/or in which the distance measurements include a measurement of a distance from a nose portion of the face model to a point on one of the eye models, and/or in which the distance measurement includes a measurement of a distance from a nose portion of the face model to an ear portion of the face model.

7. A method according to any preceding claim further comprising displaying an image of the face model to the subject, modifying the face model by modifying the eye models to simulate a rotation of the eyes, and displaying an image of the modified eye model, and preferably in which at least steps (b)-(d) are repeated at least once, to obtain updated parameters of the three-dimensional model, and said modification of the face model is according to the updated parameters.

8. A method of fabricating an element, the method including:

computing a three-dimensional (3D) face model of a face of a subject by a method according to any of claims 5 to 7;
modifying, based on the distance measurement, at least one dimension of a 3D element model of an element, and
causing the element to be fabricated according to the modified element model,
whereby the element is fabricated with at least one dimension dependent on the distance measurement, and preferably.
in which the element is fabricated by 3D printing, and/or in which the element is at least a component of an object to be placed in proximity to the face of the subject.

9. A method of displaying to a subject a composite image of the subject's face and an model of the object, the method comprising:

computing a three-dimensional (3D) face model of a face of a subject by a method according to any of claims 1 to 7;

forming a composite image of the face model and a model of an object, the composite image showing the object in proximity to the face model; and
displaying the composite image.

10. A method according to claim 9 when dependent on any of claims 5 or 6 in which the processor is arranged to use the distance measurements to modify the model of the object, the composite image being of the face model and the modified model of the object.

11. A method according to any of claims 8 to 12 in which the object is an item of eyewear, and preferably in which the object is a pair of glasses.

12. A method according to any of claims 8 to 11 in which the object comprises an electronic image generation device for generating and presenting an image to the eyes of the subject, and/or further comprising determining whether the model of the object is spaced from at least one portion of the face model by at least a predetermined distance.

13. An apparatus for computing a three-dimensional (3D) face model of a face of a subject, comprising:

at least one directional energy source arranged to directionally illuminate the face of the subject in at least three directions;
an imaging sensing assembly having at least one energy sensor arranged to capture at least one image of the face when the face is illuminated in the at least three directions;
a processor arranged to analyze the images, the apparatus being configured to perform the method of any one of claims 1 to 12.

**Patentansprüche**

1. Computerimplementiertes Verfahren zum Berechnen eines dreidimensionalen (3D) Gesichtsmodells eines Gesichts einer Person, das Verfahren umfassend:

(a) Beleuchten des Gesichts der Person in mindestens drei Richtungen;
(b) Aufzeigen eines oder mehrerer Bilder des Gesichts, wenn das Gesicht in den mindestens drei Richtungen beleuchtet wird;
(c) Detektieren von spiegelnden Reflexionen in mindestens einem der Bilder;
(d) für mindestens ein Auge des Gesichts Anpassen einer Vielzahl von Parametern eines dreidimensionalen Modells des Auges an die detektierten spiegelnden Reflexionen;

(e) Verwenden mindestens eines der Bilder zum Erzeugen von fotometrischen Daten für eine Vielzahl von jeweiligen Positionen auf dem Gesicht;

(f) Verwenden der fotometrischen Daten zum Erzeugen eines zweiten dreidimensionalen Modells eines Abschnitts des Gesichts; und

(g) Bilden des Gesichtsmodells durch Kombinieren des Modells des mindestens einen Auges und des zweiten Modells, wobei

das Modell des mindestens einen Auges einen Skleraabschnitt, der eine Sklera des Auges repräsentiert, und einen Korneaabschnitt, der eine Kornea des Auges repräsentiert, umfasst; und der Skleraabschnitt des Augenmodells ein Abschnitt der Oberfläche einer ersten Kugel ist und der Korneaabschnitt ein Abschnitt der Oberfläche einer zweiten Kugel mit einem kleineren Krümmungsradius als die erste Kugel ist, wobei die Mittelpunkte der zwei Kugeln voneinander beabstandet sind und die Parameter des Modells die Rotationsposition relativ zu einem Zentrum des Skleraabschnitts einer Linie, die durch die Mittelpunkte der zwei Kugeln verläuft, umfassen.

2. Verfahren nach Anspruch 1, wobei in Schritt (b) jedes der Bilder von einem korrespondierenden einen einer Vielzahl von Blickpunkten aufgezeichnet wird und der Schritt (f) des Erzeugens des zweiten Modells durchgeführt wird durch:

Erzeugen von geometrischen Daten, umfassend ein anfängliches dreidimensionales Modell, durch stereoskopische Rekonstruktion unter Verwendung von optischer Triangulation; und

Kombinieren der geometrischen Daten und der fotometrischen Daten.

3. Verfahren nach Anspruch 1 oder Anspruch 2, ferner enthaltend Verwenden mindestens eines der Bilder zum Ableiten von Farbdaten in Relation zu der Kornea und Assoziieren der Farbdaten mit dem Korneaabschnitt des mindestens einen Augenmodells.

4. Verfahren nach einem der Ansprüche 1 bis 4, wobei:

das Beleuchten des Gesichts durch Steuern einer Vielzahl von direktionalen Energiequellen erfolgt, wobei in jedem von aufeinanderfolgenden Zeitperioden eine jeweilige Teilmenge der direktionalen Energiequellen aktiviert wird, und das Verfahren ferner umfasst, mindestens eines der Bilder in jeder der Zeitperioden aufzuzeichnen,

wobei die spiegelnden Reflexionen in jedem der Bilder auf der Teilmenge der direktionalen Energiequellen beruhen, die Energie in der korrespondierenden Zeitperiode erzeugten.

5. Verfahren nach einem der Ansprüche 1 bis 4, ferner umfassend Erlangen einer oder mehrerer Distanzmessungen von dem Gesichtsmodell.

6. Verfahren nach Anspruch 5, wobei das Gesichtsmodell Augenmodelle für jedes der Augen der Person enthält und die Distanzmessungen eine Messung der Beabstandung von zwei Pupillen der jeweiligen Augenmodelle enthalten und/oder wobei die Distanzmessungen eine Messung einer Distanz von einem Nasenabschnitt des Gesichtsmodells zu einem Punkt auf einem der Augenmodelle enthalten und/oder wobei die Distanzmessung eine Messung einer Distanz von einem Nasenabschnitt des Gesichtsmodells zu einem Ohrenabschnitt des Gesichtsmodells enthält.

7. Verfahren nach einem der vorstehenden Ansprüche, ferner umfassend Anzeigen, der Person, eines Bilds des Gesichtsmodells, Modifizieren des Gesichtsmodells durch Modifizieren der Augenmodelle, um eine Drehung der Augen zu simulieren, und Anzeigen eines Bilds des modifizierten Augenmodells und wobei vorzugsweise die Schritte (b)-(d) mindestens einmal wiederholt werden, um aktualisierte Parameter des dreidimensionalen Modells zu erhalten, und wobei die Modifikation des Gesichtsmodells gemäß den aktualisierten Parametern erfolgt.

8. Verfahren zum Herstellen eines Elements, das Verfahren enthaltend:

Berechnen eines dreidimensionalen (3D) Gesichtsmodells eines Gesichts einer Person durch ein Verfahren nach einem der Ansprüche 6 bis 7;

Modifizieren, basierend auf der Distanzmessung, mindestens einer Dimension eines 3D-Element-Modells eines Elements und

Bewirken, dass das Element gemäß dem modifizierten Elementmodell hergestellt wird,

wobei das Element mit mindestens einer Dimension abhängig von der Distanzmessung hergestellt wird und vorzugsweise

wobei das Element durch 3D-Drucken hergestellt wird und/oder wobei das Element mindestens eine Komponente eines Objekts ist, das nahe dem Gesicht der Person anzuordnen ist.

9. Verfahren zum Anzeigen, einer Person, eines zusammengesetzten Bilds des Gesichts der Person und eines Modells des Objekts, das Verfahren umfassend:

Berechnen eines dreidimensionalen (3D) Gesichtsmodells eines Gesichts einer Person durch ein Verfahren nach einem der Ansprüche 1 bis 7;

Bilden eines zusammengesetzten Bildes des Gesichtsmodells und eines Modells eines Objekts, wobei das zusammengesetzte Bild das Objekt nahe dem Gesichtsmodell zeigt; und Anzeigen des zusammengesetzten Bilds.

10. Verfahren nach Anspruch 9 bei Abhängigkeit von einem der Ansprüche 5 oder 6, wobei der Prozessor angeordnet ist zum Verwenden der Distanzmessungen zum Modifizieren des Modells des Objekts, wobei das zusammengesetzte Bild ein Bild des Gesichtsmodells und des modifizierten Modells des Objekts ist.

11. Verfahren nach einem der Ansprüche 8 bis 12, wobei das Objekt ein Artikel von Brillenerzeugnissen ist und wobei das Objekt vorzugsweise eine Brille ist.

12. Verfahren nach einem der Ansprüche 8 bis 11, wobei das Objekt eine elektronische Bilderzeugungsvorrichtung um ein Bild zu erzeugen und es den Augen der person zu präsentieren umfasst, und/oder ferner umfassend Bestimmen, ob das Modell des Objekts von mindestens einem Abschnitt des Gesichtsmodells um mindestens eine im Voraus bestimmte Distanz beabstandet ist.

13. Gerät zum Berechnen eines dreidimensionalen (3D) Gesichtsmodells eines Gesichts einer Person, umfassend:

mindestens eine Quelle direktionaler Energie, angeordnet zum direktionalen Beleuchten des Gesichts der Person in mindestens drei Richtungen;

eine Bilderfassungsbaugruppe mit mindestens einem Energiesensor, angeordnet zum Aufzeichnen mindestens eines Bilds des Gesichts, wenn das Gesicht in den mindestens drei Richtungen beleuchtet wird;

einen Prozessor, angeordnet zum Analysieren der Bilder,

wobei das Gerät konfiguriert ist zum Durchführen des Verfahrens nach einem der Ansprüche 1 bis 12.

**Revendications**

1. Procédé mis en œuvre par ordinateur pour calculer un modèle de visage tridimensionnel (3D) d'un visage d'un sujet, le procédé comprenant :

(a) l'éclairage du visage du sujet dans au moins trois directions ;

(b) la capture d'une ou de plusieurs image(s) du visage lorsque le visage est éclairé dans les au moins trois directions ;

(c) la détection de réflexions spéculaires à l'intérieur d'au moins l'une des images ;

(d) pour au moins un œil du visage, le réglage d'une pluralité de paramètres d'un modèle tridimensionnel de l'œil par rapport aux réflexions spéculaires détectées ;

(e) l'utilisation d'au moins l'une des images pour générer des données photométriques pour une pluralité de positions respectives sur le visage ;

(f) l'utilisation des données photométriques pour générer un second modèle tridimensionnel d'une partie du visage ; et

(g) la formation du modèle de visage en combinant le modèle de l'au moins un œil et le second modèle ; dans lequel :

le modèle de l'au moins un œil comprend une partie de sclère qui représente une sclère de l'œil et une partie de cornée qui représente une cornée de l'œil ; et la partie de sclère du modèle d'œil est une partie de la surface d'une première sphère et la partie de cornée est une partie de la surface d'une seconde sphère qui présente un rayon de courbure qui est plus petit que celui de la première sphère, les centres des deux sphères étant espacés l'un de l'autre, et les paramètres du modèle comprenant la position en rotation, par rapport à un centre de la partie de sclère, d'une ligne qui passe par les centres des deux sphères.

2. Procédé selon la revendication 1, dans lequel, au niveau de l'étape (b), chacune des images est capturée à partir d'un point de vue correspondant d'une pluralité de points de vue, et l'étape (f) de génération du second modèle est réalisée en :

générant des données géométriques qui comprennent un modèle tridimensionnel initial par reconstruction stéréoscopique en utilisant une triangulation optique ; et en combinant les données géométriques et les données photométriques.

3. Procédé selon la revendication 1 ou la revendication 2, incluant en outre l'utilisation d'au moins l'une des images pour dériver des données de couleur en relation avec la cornée et pour associer les données de couleur à la partie de cornée du modèle de l'au moins un œil.

4. Procédé selon l'une quelconque des revendications 1 à 4, dans lequel :

l'éclairage du visage est réalisé en commandant une pluralité de sources d'énergie directionnelles, dans lequel, dans chacune de périodes temporelles successives, les sources d'énergie directionnelles d'un sous-jeu respectif des sources d'énergie directionnelles sont activées ; et le procédé comprend en outre la capture d'au moins l'une des images dans chacune des périodes temporelles ;

d'où il résulte que les réflexions spéculaires dans chacune des images sont dues aux sources d'énergie directionnelles du sous-jeu des sources d'énergie directionnelles qui ont produit l'énergie dans la période temporelle correspondante.

5. Procédé selon l'une quelconque des revendications 1 à 4, comprenant en outre l'obtention d'une ou de plusieurs mesure(s) de distance à partir du modèle de visage.

6. Procédé selon la revendication 5, dans lequel le modèle de visage inclut des modèles d'oeil pour chacun des yeux du sujet, et les mesures de distance incluent une mesure de l'espacement de deux pupilles des modèles d'oeil respectifs, et/ou dans lequel les mesures de distance incluent une mesure d'une distance depuis une partie de nez du modèle de visage jusqu'à un point sur l'un des modèles d'oeil, et/ou dans lequel la mesure de distance inclut une mesure d'une distance depuis une partie de nez du modèle de visage jusqu'à une partie d'oreille du modèle de visage.

7. Procédé selon l'une quelconque des revendications qui précèdent, comprenant en outre l'affichage d'une image du modèle de visage pour le sujet, la modification du modèle de visage en modifiant les modèles d'oeil de manière à simuler une rotation des yeux et l'affichage d'une image du modèle d'oeil modifié et de préférence, dans lequel au moins les étapes (b) à (d) sont répétées au moins une fois, pour obtenir des paramètres mis à jour du modèle tridimensionnel, et ladite modification du modèle de visage est conforme aux paramètres mis à jour.

8. Procédé de fabrication d'un élément, le procédé incluant :

le calcul d'un modèle de visage tridimensionnel (3D) d'un visage d'un sujet au moyen d'un procédé selon l'une quelconque des revendications 5 à 7 ;
la modification, sur la base de la mesure de distance, d'au moins une dimension d'un modèle d'élément 3D d'un élément ; et
le déclenchement de la fabrication de l'élément conformément au modèle d'élément modifié ;

moyennant quoi l'élément est fabriqué de sorte qu'au moins une dimension dépende de la mesure de distance, et de préférence :
dans lequel l'élément est fabriqué par impression 3D, et/ou dans lequel l'élément est au moins un composant d'un objet qui est destiné à être placé à proximité du visage du sujet.

9. Procédé d'affichage pour un sujet d'une image composite du visage du sujet et d'un modèle de l'objet, le procédé comprenant :

le calcul d'un modèle de visage tridimensionnel (3D) d'un visage d'un sujet au moyen d'un procédé selon l'une quelconque des revendications 1 à 7 ;
la formation d'une image composite constituée par le modèle de visage et par un modèle d'un objet, l'image composite représentant l'objet à proximité du modèle de visage ; et
l'affichage de l'image composite.

10. Procédé selon la revendication 9 lorsqu'elle dépend de l'une quelconque des revendications 5 ou 6, dans lequel le processeur est agencé pour utiliser les mesures de distance pour modifier le modèle de l'objet, l'image composite étant l'image constituée par le modèle de visage et par le modèle modifié de l'objet.

11. Procédé selon l'une quelconque des revendications 8 à 12, dans lequel l'objet est un article de lunetterie et de préférence, dans lequel l'objet est une paire de lunettes.

12. Procédé selon l'une quelconque des revendications 8 à 11, dans lequel l'objet comprend un dispositif de génération d'image électronique pour générer et présenter une image au niveau des yeux du sujet, et/ou comprenant en outre la détermination de si le modèle de l'objet est espacé d'au moins une partie du modèle de visage par au moins une distance prédéterminée.

13. Appareil pour calculer un modèle de visage dimensionnel (3D) d'un visage d'un sujet, comprenant :

au moins une source d'énergie directionnelle qui est agencée pour éclairer en termes de directionnalité le visage du sujet dans au moins trois directions ;
un assemblage de détection de formation d'image qui comporte au moins un capteur d'énergie qui est agencé pour capturer au moins une image du visage lorsque le visage est éclairé dans les au moins trois directions ; et
un processeur qui est agencé pour analyser les images ;
l'appareil étant configuré pour réaliser le procédé selon l'une quelconque des revendications 1
à 12.

Fig. 1

Fig. 2

11

10

Fig. 3

Fig. 4

Fig. 5

FIG. 6

200

| UI 330 | | Camera 2a | | Camera 3a |

Energy source 2b

Energy source 1

| Secondary Storage |
| 324 |
| 324a |

CPU

322

RAM

328

ROM

326

Energy source 3b

Object production device 332

FIG. 7

**EP 3 371 781 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009122200 A